Europäisches Patentamt

European Patent Office

Office européen des brevets

(11) Publication number: 0 346 047
A2

# (12) EUROPEAN PATENT APPLICATION

(21) Application number: 89305659.8

(22) Date of filing: 05.06.89

(51) Int. Cl.⁴: B60C 3/04 , B60C 15/024

(30) Priority: 10.06.88 GB 8813776

(43) Date of publication of application:
13.12.89 Bulletin 89/50

(84) Designated Contracting States:
DE FR GB IT

(71) Applicant: SUMITOMO RUBBER INDUSTRIES
LIMITED
1-1 Tsutsuicho 1-chome Chuo-ku
Kobe-shi Hyogo-ken(JP)

(72) Inventor: Griffiths, Gerald Anthony
19 Linden Avenue Chase Terrace
Nr Walsall West Midlands WS7 8AX(GB)
Inventor: Jackson, Michael
32 Welford Avenue
Yardley Birmingham B26 2LD West
Midland(GB)
Inventor: Watkins, David Robert
8 Leafy Glade Streetly
Sutton Coldfield B74 3EG West Midland(GB)

(74) Representative: Stewart, Charles Geoffrey
SP TYRES UK LIMITED Tyre Technical
Division
Fort Dunlop Erdington Birmingham B24
9QT(GB)

(54) Motor-cycle radial tyre.

(57) A motor-cycle tyre comprising a tread region (9) having in the normally fitted inflated condition in transverse cross section a curved cross section with a camber value C/L of between 70% and 50% a pair of sidewalls (11), a radial ply reinforced carcass (6) extending between two reinforced bead regions (1 & 2) through the sidewalls (11) and under the tread region (9) and a breaker (10) reinforcing the tread region (9) characterised in that the sidewalls (11) each extend radially outwardly from the bead region (1,2) to the tread edge region (12) in an axially inward direction such that the tyre bead regions (1,2) are axially outwardly of the tread edges (12).

Fig.1.

# MOTOR-CYCLE RADIAL TYRE

This invention relates to motor-cycle radial tyres and in particular to high performance or race motor cycle tyres.

Such tyres utilise very wide treads which in transverse cross section have great curvature to provide for tread/road contact when the motorcycle is steeply banked when cornering. The maintaining of a consistent ground contact patch and even ground contact pressure within the said contact patch is a major factor in cornering speeds under race conditions and this is particularly so with radial tyre constructions.

Present radial race tyres constructions have short, radial ply reinforced sidewalls which extend to the tread edges radially outwardly and axially outwardly from the tyre beads which provide the engagement to the wheel rim at tapered bead seats. The ply tension and inflation pressure act together with the sidewall directions to provide location of the curved tread regions to withstand cornering forces, but the inventors have discovered that the ground contact patch is still not constant with changing side forces on the tyre. Accordingly, it is an object of the present invention to overcome this problem whilst maintaining the low rolling resistance of radial tyres.

According to one aspect of the present invention a motor-cycle tyre comprises a tread region having in the normally fitted inflated condition in cross section a curved cross section with a camber value C/L of between 70% and 50%, a pair of sidewalls, a radial ply reinforced carcass extending between two reinforced bead regions through the sidewalls and under the tread region and a breaker reinforcing the tread region characterised in that the sidewalls each extend radially outwardly from the bead region to the edge of the tread region in an axially inward direction such that the tyre bead regions are axially outwards of the tread edges.

By camber value is meant the ratio C/L between the distance C' in the radial direction from the centre of the tyre tread to the edge of the tyre tread and the distance L in the axial direction from the edge of the tread to the radial centre line of the tyre. Thus the tyre has the sidewalls pointing axially outwardly towards the tread edges so that they are to a large extent in line with the tread region at the beginning of its curved cross section.

Preferably, the sidewalls extend at an angle between 5 and 30 degrees to the radial plane at the heel point of each tyre bead taking the sidewall direction as the line from the outer surface of the tread edge to the heel point.

The sidewalls of the tyre preferably include a rubber insert of substantial thickness positioned outside the radial ply reinforcement which insert is subject to compression forces on fitting and inflating the tyre on its rim which compression forces act axially inwardly on the tread edges to stabilise the tyre still further.

The tyre preferably has very short sidewalls measured from tread to bead between 20 and 45 % of the tyre section height at the tread centre line.

Further aspects of the present invention will become apparent from the following description of one example of the present invention in conjunction with the attached drawings in which:-

Fig.1. shows the fitted cross sectional shape of the tyre and

Fig.2. shows the tyre in the moulded condition and also shows the internal components.

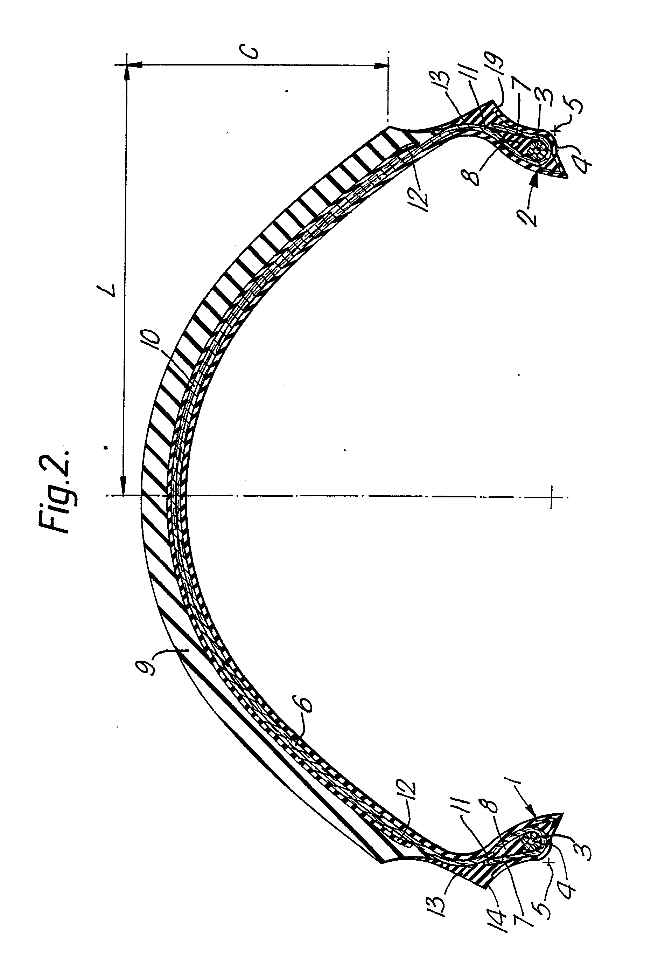

The tyre shown is a 170/35R18 radial ply reinforced tyre which is intended to be fitted to a wheel rim having a width of 6.75 inches between the flanges, note that the wheel rim is in fact wider than the tyre section width of 170mm. The tyre construction is shown briefly in figure 2 and it comprises a pair of bead regions 1 & 2 each reinforced by a steel core 3 and having tapered bead seats 4 to fit the wheel rim. Adjacent the beads there are heel points 5 which are the points at which the bead seat line intersects with the line down the flange engaging portion of the tyre bead. The heel points 5 are conventional reference points for tyres. The tyre is reinforced by a single ply 6 of rayon cord reinforced tyre carcass ply material each edge of which is folded outwardly under the bead core 3 to form a short turnup 7 adjacent to a hard rubber apex 8. The tyre carcass ply 6 extends in a curved cross sectional shape as shown.

The tyre has a wide tread region 9 comprising special compound rubber for engagement with the road surface and this is sharply curved in cross section as shown so that the resultant tyre has a camber value C/L of 61%. The tread is also reinforced by a breaker package 10 comprising two plies of breaker reinforcement material which in this case is Kevlar (registered trademark) cord material.

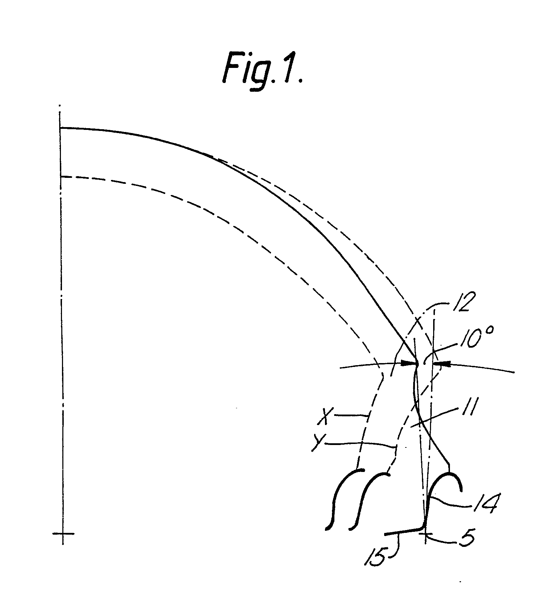

As can be seen the sidewalls 11 of the tyre which connect the bead regions 1 & 2 to the tread edge regions 12,which are the regions where the breaker and the tread ends, are very short being approximately 40% of the total section height of the tyre. The sidewalls 11 also include a triangular cross section insert 13 of rubber material which extends from the flange contacting region of the bead 14 to the breaker and tread edge 12. The fitted condition of the tyre is shown in figure 1 where only the outer surface of the tyre tread region and the sidewall is shown together with a flange 14 and bead seat 15 on the wheel rim. The fitted condition should be compared with a conventional 330/580R18 tyre X fitted to its standard 5 inch rim and a 375/725R18 standard tyre Y fitted to its standard rim of 5.5 inches as shown in the figure in broken lines.

As can be seen the angle of the sidewall and hence the ply in the sidewall is substantially different from the prior art tyres in that the sidewall coming from the flange region projects axially inwardly of the tyre so that it largely lines up with the first or edge region of the breaker and tread 12. Thus in the fitted condition the angle of the sidewall is approximately 10 degrees to the radial direction taken through the heel point 5 which point is defined for a wheel rim in the same way as that for a tyre.

The resultant tyre when fitted to its wheel rim and inflated has been found to provide an improved consistency of ground contact patch when measured for different degrees of lean or bank of the motor-cycle and this it is considered is due to the angle of the sidewalls and the interaction of the inserts of rubber on the outside of the ply in the sidewall regions. The resultant tyre has further advantages in that its rolling resistance is substantially the same as the standard radial tyre showing no increase beyond normal experimental error. It was also found that the tyre may be run at a lower pressure for example 26 psi compared with 30 psi in the 375/725R18 comparison tyre case and this gave a significant increase in ground contact area. Furthermore, the ground contacting pressure pattern was found to be substantially more uniform over the contact area of the tyre which effect was greatly unexpected and gives substantial advantages in racing conditions.

The tyre also provides increased cross sectional stability when subjected to varying side forces and uneven loadings on the motor-cycle such a occur under-braking and acceleration.

Furthermore, the tyre and wheel assembly has aerodynamic advantages on the motor-cycle in creating less turbulence than in conventional race tyres because of the over-hang of the very wide tread and projecting shoulders over the wheel rim.

## Claims

1. A motor-cycle tyre comprising a tread region (9) having in the normally fitted inflated condition in transverse cross section a curved cross section with a camber value C/L of between 70% and 50%, a pair of sidewalls, (11) ,a radial ply reinforced carcass (6) extending between two reinforced bead regions (1 & 2) through the sidewalls (11) under the tread region (9) and a breaker (10) reinforcing the tread region (9) characterised in that the sidewalls (11) extend radially outwardly from the bead region (1 & 2) to the tread edge region (12) in an axially inward direction such that the tyre bead regions (1,2) are axially outwards of the tread edges (12).

2. A tyre according to claim 1 characterised in that the sidewalls (11) extend at an angle of between 5 degrees and 30 degrees to the radial plane at the heel point (5) of each tyre bead (1,2).

3. A tyre according to claim 2 characterised in that the sidewalls (11) include a rubber insert (13) of substantial thickness outside the radial ply reinforcement (6) which insert (13) is subject to compression forces on fitting and inflating the tyre on its rim which compression forces act axially inwardly on the tread edges (12) to stabilise the tyre.

4. A tyre according to claims 1, 2 or 3 characterised in that the sidewalls (11) are short being between 20% and 45% of the tyre section height at the tread centre line.

# Fig.1.

# Fig.2.

EP 0 346 047 A2